(19) Europäisches Patentamt
European Patent Office
Office européen des brevets

(11) **EP 4 786 079 A1**

(12) **EUROPEAN PATENT APPLICATION**

(43) Date of publication:
**05.08.2026 Bulletin 2026/32**

(21) Application number: **25155140.4**

(22) Date of filing: **31.01.2025**

(51) International Patent Classification (IPC):
**B23B 1/00** $^{(2006.01)}$ **B23B 25/02** $^{(2006.01)}$
**B23B 27/14** $^{(2006.01)}$

(52) Cooperative Patent Classification (CPC):
**B23B 1/00; B23B 25/02; B23B 27/145;**
B23B 2200/0404; B23B 2200/0414; B23B 2220/126

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **AB Sandvik Coromant
811 81 Sandviken (SE)**

(72) Inventors:
• **WIKBLAD, Krister
811 81 SANDVIKEN (SE)**
• **LÖF, Ronnie
811 81 Sandviken (SE)**
• **WICKSTRÖM, David
811 81 Sandviken (SE)**

(74) Representative: **Sandvik
Sandvik Intellectual Property AB
811 81 Sandviken (SE)**

(54) **A TURNING METHOD FOR MACHINING A METAL WORKPIECE**

(57) The present invention relates to a turning method for machining a metal workpiece with a turning tool comprising a cutting edge, which cutting edge includes a cutting nose and a clearance corner, wherein the method comprises the steps of:
- determining a final machined profile of the metal workpiece, wherein the final machined profile comprises a main surface and a shoulder surface;
- determining a cutting depth;
- rotating the metal workpiece around an axis of rotation;
- cutting the metal workpiece with the cutting nose by,

- a) moving, at the cutting depth, the cutting nose along the main surface, towards the shoulder surface,

- b) moving the cutting nose further toward the shoulder surface until the clearance corner is positioned on the shoulder surface,
- c) moving the cutting nose away from the shoulder surface,
- d) moving the cutting nose toward the shoulder surface until the clearance corner is positioned on the shoulder surface,
- e) moving the cutting nose away from the shoulder surface,
wherein any of the steps b - e comprises moving the cutting nose towards the main surface,
- f) moving, at the cutting depth, the cutting nose along the main surface, further away from the shoulder surface.

*Fig 4a*

**Description**

TECHNICAL FIELD

The invention relates to a turning method for machining a metal workpiece with a turning tool.

BACKGROUND

Within the field of metal cutting, a turning tool may be used for machining the surface of a rotating metal workpiece. A cutting insert, for example made of cemented carbide or some other wear resistant material, is commonly arranged at the front of such turning tool.

Workpieces to be machined may come in various shapes. A workpiece may often have a generally longitudinal extension along the rotation axis thereof. In some cases there is desired to machine one or more radial portions or "shoulders", i.e. portions of the workpiece extending in a radial direction (in a plane perpendicular to the rotation axis). It may be challenging to efficiently machine such workpieces, in particular current methods are associated with a number of drawbacks.

The inventors have found that the state of the art has some drawbacks, and that there is a need for a further improved turning method for metal cutting. Especially, the inventors have found that one disadvantage relates to rather extensive additional machining for achieving a selected final profile of the metal workpiece, which profile has at least one shoulder. There is a need for further reducing operational time related to this additional machining.

SUMMARY

It is an object of the present invention to at least partly obviate the above-mentioned problems.

One object is to provide a method for machining a workpiece using a turning tool that efficiently machines a shoulder of the workpiece as well as a longitudinal portion of the workpiece extending from the shoulder.

At least one object is achieved according to the invention by providing a metal cutting turning method as defined in claim 1.

According to an aspect of the invention there is provided a turning method for machining a metal workpiece with a turning tool comprising a cutting edge, which cutting edge includes a cutting nose and a clearance corner,

wherein the method comprises the steps of:

- determining a final machined profile of the metal workpiece, wherein the final machined profile comprises a main surface and a shoulder surface;
- determining a cutting depth;
- rotating the metal workpiece around an axis of rotation;
- cutting the metal workpiece with the cutting nose by,

- a) moving, at the cutting depth, the cutting nose along the main surface, towards the shoulder surface,
- b) moving the cutting nose further toward the shoulder surface until the clearance corner is positioned on the shoulder surface,
- c) moving the cutting nose away from the shoulder surface,
- d) moving the cutting nose toward the shoulder surface until the clearance corner is positioned on the shoulder surface,

    - e) moving the cutting nose away from the shoulder surface,
      wherein any of the steps b - e comprises moving the cutting nose towards the main surface,

- f) moving, at the cutting depth, the cutting nose along the main surface, further away from the shoulder surface.

Advantageously a turning method suitable for turning tools that includes strong cutting inserts with relative large cutting nose radius is provided. Compared to prior art solutions wherein the cutting nose is only moved in one direction away from the shoulder and toward the main surface and thereafter, at a certain cutting depth, further away from the shoulder. In certain applications involving a cutting nose having a relatively large nose radius rather extensive additional machining for achieving a selected final profile of the metal workpiece is required. By the inventive method machining of the workpiece can be performed in such a way that less additional machining for achieving a selected final profile of the metal workpiece is required. In a number of applications plastic deformation of the cutting edge and/or the metal workpiece is reduced or eliminated. This is among other things due to the favourable load distribution achieved with a cutting edge with a relatively large cutting nose angle.

Advantageously improved chip control is achieved by performing the steps c and d by moving the cutting nose a relatively short distance along the main surface.

Advantageously machining of a shoulder hereby is performed in a time efficient manner. Machining of the final machined profile may to a great extent be performed at a relatively large cutting depths. Advantageously high productivity and longer tool life is achieved by using the proposed method.

The cutting nose is moved along a cutting path. The metal workpiece is cut by moving the cutting nose along the cutting path. The cutting path may comprise at least three return points.

The method may comprise the step of determining the cutting path. The method may comprise the step of determining the cutting path on basis of the determined final machined profile. The method may comprise the step of determining the cutting path on basis of the selected cutting depth.

Advantageously, by cutting the metal workpiece along the cutting path a minimum of workpiece material remains to be machined so as to achieve the determined final machined profile of the workpiece.

In applications where machining is performed for one shoulder a more robust turning tool may be used. Also, in applications where a groove having two shoulders, and wherein the depth of the groove is relatively small, more robust turning tool may be used. Hereby vibrations during machining may be reduced.

According to an example the steps b - e comprise moving the cutting nose toward the main surface a distance at most the cutting depth. Hereby a portion of the shoulder surface is machined, namely a portion corresponding to at most the cutting depth. According to the proposed method a facing operation of the shoulder surface is performed by repeating the steps b - e. By repeating the facing operation a number of times the cutting nose is reaching the selected cutting depth, wherein the cutting edge subsequently is cutting the workpiece along the main surface at the selected cutting depth.

According to an example both the steps c and d comprise moving the cutting nose towards the main surface. Hereby the determined cutting depth is reached in a time effective manner because each cutting movement away from the shoulder surface and toward the shoulder surface also results in positioning the cutting nose at a distance closer to the determined cutting depth.

According to an example the turning method comprises the step of:

- after step b, performing the steps c - d a plurality of times before performing the step f. Hereby improved overall cutting load distribution is achieved. Hereby favourable sized chips may be formed, which chips have little negative impact of the shoulder surface to be machined.

According to an example the step b further comprises moving the cutting nose away from the main surface. Hereby a differentiated chip control is achieved. According to some applications improved chip control is achieved. According to other applications improved surface finish of the shoulder surface is achieved. By moving the cutting nose toward the shoulder surface and away from the main surface the clearance corner may cut some material of the workpiece on the shoulder surface that has not been removed during a previous machining pass. Hereby an improved machining of the shoulder surface is achieved according to the proposed method.

According to an example the turning method comprises the steps of:

- selecting an entering angle of the cutting edge, which entering angle is within the interval of 10°-45°;

- performing any of the steps a - f, by cutting at the selected entering angle.

Advantageously the metal cutting hereby is performed at relatively low entering angles. Hereby improved chip control may be achieved. Also, selecting such an entering angle machining may be performed at a relative high cutting depth, such as at least 3.0 mm. Hereby relative few passes of the cutting edge is needed to machine the final machined profile comprising the shoulder surface and main surface. Advantageously improved turning tool life may be achieved.

According to an example machining during exactly all of the steps a - f is performed by cutting at the same selected entering angle. Hereby the entering angle of the cutting edge does not have to be changed during metal cutting of the metal workpiece. By selecting an entering angle within the interval of 10°-45° a relatively high cutting depth may be determined. Advantageously improved cutting force load distribution is provided.

According to an example the turning method further comprises:

- repeating the steps a - f a plurality of times.

Hereby a number of shoulder surface segments is machined, each shoulder surface segment corresponds to one repetition of the steps a - f. By repeating the steps a - f the shoulder surface may be machined in a time efficient manner. Advantageously a determined cutting depth may be selected and hereby effective metal cutting is achieved when machining each of the shoulder surface segments.

According to an example the cutting edge includes two of the clearance corners, wherein the two clearance corners are located on one respective side of the cutting nose, wherein the turning method comprises the steps of:

- determining the final machined profile of the metal workpiece, wherein the final machined profile is a groove, wherein the groove comprises the main surface, two of the shoulder surface in form of a first shoulder surface and a second shoulder surface; and

- alternately performing steps a -f at the first shoulder surface and at the second shoulder surface.

Hereby a groove, also referred to as pocket, may efficiently be achieved. The groove can be machined using relatively low entering angles of the cutting edge. Advantageously the same cutting insert may be used to alternately machining the first shoulder surface and the second shoulder surface.

Advantageously the rotational direction of the metal workpiece does not have to be changed between machining the first shoulder and the second shoulder. Thus, a time-efficient machining operation is provided.

According to an example a second cutting insert may be used to machine a corner of between the main surface and the first shoulder surface after the method steps a - f have been performed. According to an example the second cutting insert may be used to machine a corner of between the main surface and the first shoulder surface after the method steps a - f have been performed. The second cutting insert is different from the cutting insert described being used during e.g. the method steps a - f. The second cutting insert may be a profiling insert, having a cutting nose, which cutting nose has a cutting nose angle of 10-25°.

According to an example the main surface extends along the axis of rotation and the shoulder surface extends inward toward the main surface. According to an example the shoulder surface extends along the axis of rotation and the main surface extends inward toward the shoulder surface. Hereby a versatile turning method is provided. The inventive method is applicable to machine a final machined profile of the metal workpiece wherein the main surface is along the rotational axis or perpendicular to the rotational axis.

According to an example the step of determining the cutting depth comprises determining the cutting depth to be within an interval of 0,5-5,0 mm. By selecting a cutting insert having a relatively large nose radius the determined cutting depth may be relatively large while still achieving good chip control during machining of the main surface. The proposed turning method allows to effectively move the cutting nose toward the main surface to the determined cutting depth. Effective machining of the main surface is achieved by cutting at a relatively large cutting depth, such as e.g. 2,0-5,0 mm. According to some applications wherein CBN cutting inserts are used a relevant cutting depth may be within the range of 0,1-0,5 mm.

According to an example any of the steps c and d comprises moving the cutting nose 2,0-10,0 mm along the main surface. Hereby a time effective facing operation is performed. By moving the cutting nose a relatively short distance along the main surface during the steps c and d it is possible to move the cutting nose to the selected cutting depth in a time efficient manner. Also, by alternately using the cutting edge on either side of the cutting nose in the steps c and d favourable cutting load distribution is achieved.

The movement of the cutting nose during the steps c and d may be determined on the basis of the selected cutting depth and a selected entering angle of the cutting edge.

According to an example wherein the selected cutting depth Ap is 1,00 mm and the cutting edge has an entering angle of 25° the length zdist of movement of the cutting nose measured in a direction parallel to the main surface and/or parallel to the rotational axis should be at least

$$zdist = 2,14\ mm = Ap*\tan(entering\ angle)$$

for reaching at least half the cutting depth.

According to an example the turning method further comprises the steps of,

- determining a sub path angle relative to the main surface, which angle is 2-10° less than the selected entering angle of the cutting edge; and

- when moving the cutting nose towards the main surface during any of the steps c and d, moving the cutting nose at the determined sub path angle.

Advantageously by moving of the cutting nose along the determined sub path a limited portion of the cutting edge is in active cut. Advantageously only one main cutting edge is in active cut during the movement toward the shoulder surface or during the movement away from the shoulder surface. Hereby an improved temperature distribution of the cutting edge is achieved.

The turning method according to any one of the preceding claims, comprising, during either step c or d, moving the cutting nose at least half the cutting depth. According to an example the cutting nose is moved away from the shoulder surface and toward the main surface to half the cutting depth. In a subsequent step the cutting nose is moved toward the shoulder surface and toward the main surface to the selected cutting depth. According to this example the selected cutting depth is reached by only performing two movements of the cutting nose. This advantageously provides a time effective facing operation. Furthermore, by moving the cutting nose according to the example a relatively simple programming of the turning tool movement is required.

According to an example the cutting edge comprises a first main cutting edge connected to the cutting nose and a second main cutting edge connected to the cutting nose at an opposite side thereof. One main cutting edge is in active cut when moving toward the shoulder surface and the other main cutting edge is not in active cut when moving toward the shoulder surface. One main cutting edge is in active cut when moving away from the shoulder surface and the other main cutting edge is not in active cut when moving away from the shoulder surface. The method comprises the step of selecting a direction of movement for steps c and d for forming a clearance angle between the main cutting edge not being in active cut and the workpiece. Hereby improved chip control is achieved.

According to an example the selected clearance angle is achieved by tipping the cutting edge of the cutting tool. According to an example the selected clearance angle is achieved by orienting the cutting edge of the cutting tool. According to an example the selected clearance angle is achieved by selecting a suitable form of the cutting edge. The selected clearance angle is hereby achieved by selecting a certain geometry/model of a cutting insert comprising the cutting edge.

According to an example the turning method comprises the step of selecting a clearance angle within an interval of 2-10°, and performing any of the steps c and d at the selected clearance angle. Advantageously one of the main cutting edges of the cutting edge hereby is not in active cut during cutting according to any one of the steps c and d. Hereby improved thermal control is achieved. The amount of generated heat during machining is hereby reduced. Hereby e.g. plastic deformation of the workpiece and the cutting edge may be reduced or eliminated.

According to an example the step of determining the final machined profile of the metal workpiece comprises selecting an internal angle of 90-120° between the main surface and the shoulder surface. According to an embodiment the internal angle between the main surface and the shoulder surface is 90°. According to this embodiment the metal workpiece may be machined in such away that the only remaining metal in a corner between the main surface and the shoulder surface to be removed to achieve the final profile is defined by the geometry of the cutting insert.

In a case where the final machined profile comprises two shoulders (pocket) and the internal angle between the second shoulder and the main surface may also be within the interval of 90-120°.

According to an example at least one shoulder surface is non linear. The final machined profile may comprise at least one curved shoulder surface.

According to other embodiments, the shoulder surface may be machined in such a way that the remaining metal of the metal workpiece to be removed for achieving the determined final profile is less compared to when machining according to prior art.

According to another aspect, the invention relates to a system comprising a computer numerical controlled (CNC) machine tool including a turning tool for machining a metal workpiece, wherein the system further comprises processing circuitry and a memory and is configured to perform the method according to any of the embodiments described herein.

The CNC machine tool may be any machine tool that can be used for turning a metal work piece, and where the motion of the machine, such as tool path, depth of cut, feed rate, cutting speed and revolutions per time unit, is or can be controlled by a computer.

The processing circuitry and memory may be intrinsic parts of the CNC machine tool, e.g., comprised in the built-in controller of the CNC machine tool. Alternatively, or in combination, an external processing circuitry and memory may be in communicational contact with the CNC machine tool. The processing circuitry is configured to control the CNC machine tool, and thus the movement of the turning tool.

The processing circuitry may comprise one or more programmable processors, application-specific integrated circuits, field programmable gate arrays or combinations of these adapted to execute instructions. The memory may contain instructions executable by said processing circuitry, whereby the CNC machine tool is operative for machining the workpiece.

The instructions executable by the processing circuitry may be arranged as a numerical control program, for example stored in the memory. The numerical control program may comprise computer readable code means, which when executed by the processing circuitry causes the system and the CNC machine tool to perform the method according to any one of the embodiments described herein.

The numerical control program may comprise computer readable code means to be executed by the processing circuitry of the system described herein, which computer readable code means when executed causes the system to perform the method according to any one of the embodiments described herein.

The numerical control program may be carried by a computer readable storage medium connectable to the processing circuitry, such as the memory. The memory may be realized as for example a RAM (Random-access memory), ROM (Read-Only Memory) or an EEPROM (Electrical Erasable Programmable ROM). Further, the numerical control program may be carried by a separate computer-readable medium, such as a CD, DVD or flash memory, from which the program could be downloaded into the memory. Alternatively, the numerical control program may be stored on a server or any other entity connected to which the system has access. The numerical control program may then be downloaded from the server into the memory.

According to another aspect, the invention relates to a computer program for generating, based on input comprising information about a turning tool and dimensions of a metal workpiece to be machined, the numerical control program according to any of the embodiments described herein.

Such computer program may for example be a computer program for Computer Aided Manufacturing (CAM) such as a CAD/CAM computer program in which CAD models of the turning tool and workpiece, together with a model of the component to be machined, is used as input to a tool path generating process performed in the CAD/CAM computer program, wherein such computer program for this purpose includes specific modules or functions for generating tool paths in accordance with the machining methods of any of the embodiments described herein, i.e., wherein preferred tool path sequences corresponding to the method steps disclosed in any of the embodiments described herein are stored in such computer program, to be adapted to the specific turning tool properties and workpiece characteristics according to the input. The model of the component to be machined is herein also denoted a final machined profile of the metal workpiece, wherein the final machined profile comprises a main surface and a shoulder surface.

According to an embodiment, a computer program having instructions which when executed by the computer numerical control lathe cause the computer numerical control lathe to perform the method. Said computer program comprises preprogrammed sequences of machine control commands which can be executed by a CNC-lathe to perform the machining method according to an embodiment. According to an embodiment, a computer readable medium having stored thereon such a computer program. The computer readable medium, which carries the computer program, may be in the form of any computer readable memory which carries data, such as e.g. a CD-ROM disc. According to an embodiment, a data stream which is representative of such a computer program. Said data stream is a sequence of digitally encoded coherent signals used to transmit information.

A "turning tool" should be understood as a cutting tool used for machining a rotating workpiece. The turning tool is connectable to a machine tool, for example a CNC lathe or other machine tool suitable for turning operations.

An "entering angle" as used herein should be understood as the angle between the feed direction and the cutting edge. A "low" or "small" entering angle as used herein refers to an entering angle below 45°.

Herein the term "along" refers to a movement parallel to a reference surface. Herein the term "along" also refers to a movement substantially parallel to a reference surface, e.g. at a relative angle of 1-5°. Herein the term "along" also refers to a movement inclined to a reference surface at a relative angle which is larger than 5°, e.g. 5-45°.

BREIF DESCRIPTION OF THE FIGURES

The present invention will now be explained in more detail by a description of embodiments of the invention and by reference to the accompanying drawings.

Figure 1 schematically illustrates a system according to an example of the invention;

Figure 2 schematically illustrates a turning tool and a metal workpiece;

Figure 3 schematically illustrates an example of a cutting insert of the turning tool;

Figure 4a-f schematically illustrate examples of a tool path for machining the metal workpiece;

Figure 5 schematically illustrates a tool path for machining the metal workpiece;

Figure 6a schematically illustrates a tool path for machining the metal workpiece;

Figure 6b schematically illustrates a tool path for machining the metal workpiece;

Figure 7a-d schematically illustrate examples of a tool path for machining the metal workpiece; and

Figure 8 schematically illustrates a method for machining the metal workpiece with the turning tool.

DETAILED DESCRIPTION OF THE FIGURES

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

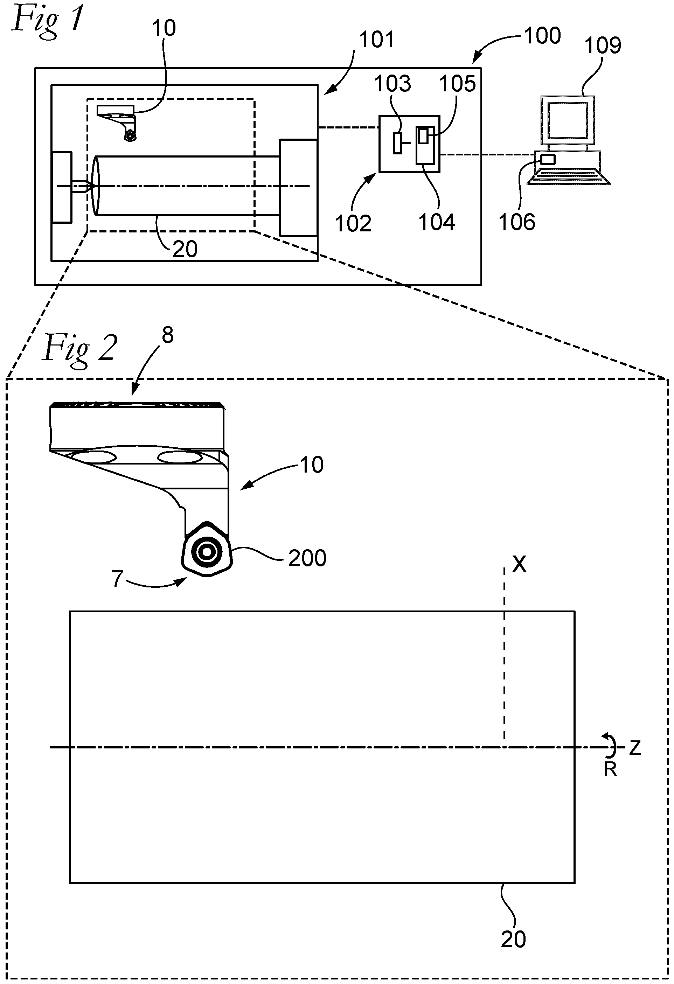

Figure 1 shows a system 100 according to an example of the invention that comprises a CNC machine tool 101, as schematically illustrated in Figure 1 including a turning tool 10 and a workpiece 20 to be machined. The system 100 further comprises a controller 102 for controlling the cutting process, which controller may be an integral part of the CNC machine tool 101. The CNC machine tool 101 may for example be a CNC lathe or any other machine tool which can be used for turning a metal work piece and is controlled by a computer 109. The controller 102 comprises processing circuitry 103 and a memory 104 in which a numerical control program 105 is stored. The controller 101 is communicationally coupled to the CNC machine tool 101 for control thereof.

Figure 1 also shows a computer 109 comprising a computer program 106 that can be used for generating the numerical control program 105, at least partly based on input regarding the characteristics of the turning tool 10 and the workpiece 20. The numerical control program 105 obtained from the use of the computer program 106 is loaded into the memory 104.

When the numerical control program 105 is executed by the processing circuitry 103, the controller is configured to control the CNC machine tool 101, including the turning tool 10, to perform a method for machining the rotating workpiece 20, which method will be described in further detail below.

With reference to Figure 2, which is an enlargement of a portion in Figure 1 there is illustrated a part of the workpiece 20 extending along a longitudinal axis Z. The longitudinal axis Z is a rotational axis of the workpiece 20. The metal workpiece 20 is rotating in a rotational direction R. A radial axis X is extending perpendicular to the rotational axis Z.

The turning tool 10 includes a tool body having a longitudinal extension from a rear end 8 to a front end 7 thereof. A cutting insert 200 is arranged at the front end 7. The turning tool 10 comprises an insert seat for holding the cutting insert 200.

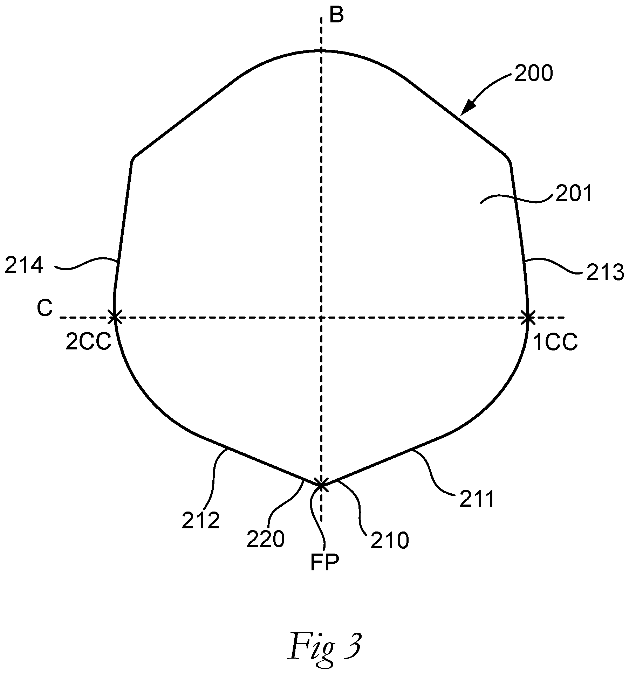

The cutting insert 200 is illustrated in greater detail with reference to Figure 3.

Figure 3 illustrates the cutting insert 200 in a top view. The cutting insert 200 comprises a first surface 201 and a second surface (not shown), wherein the first surface 201 and second surface are arranged opposite each other and facing opposite directions. A peripheral surface (not shown) connects the first surface 201 and the second surface. A cutting edge is formed by an intersection between the first surface 201 and the peripheral surface. A clearance angle or clearance space depicted herein is formed between the peripheral surface and the workpiece 20.

A longitudinal central axis B of the cutting insert 200 is illustrated. The longitudinal central axis B comprises a most forward point FP of the cutting insert 200. A radial axis C is extending perpendicular to the central axis B.

A cutting edge 210 forms a portion of the edge formed by the intersection between the first surface 201 and the peripheral surface.

The cutting edge 210 comprises a cutting nose 220. The cutting nose 220 of the cutting insert 200 comprises the most forward point FP of the cutting insert and thus a most forward point of the cutting tool 10 at the front end 7 thereof.

The cutting edge 210 comprises a first main cutting edge 211. The first main cutting edge 211 is extending from the most forward point FP of the cutting insert 200 to a first clearance corner 1CC. The first clearance corner 1CC comprises a point which is the most outward point in a direction along the radial axis C of the cutting insert 200. According to this example the cutting edge 210 also comprises a cutting edge portion 213 extending from the first clearance corner 1CC away from the cutting nose 220.

The cutting edge 210 comprises a second main cutting edge 212. The second main cutting edge 212 is extending from the most forward point FP of the cutting insert 200 to a second clearance corner 2CC. The second clearance corner 2CC comprises a point which is the most outward point in a direction along the radial axis C of the cutting insert 200. According to this example the cutting edge 210 also comprises a cutting edge portion 214 extending from the second clearance corner 2CC away from the cutting nose 220.

According to this example the cutting insert 200 is symmetrical about the longitudinal central axis B.

The cutting insert 200 for the turning tool 10 comprises:

- a first side and a second side, wherein the first and second sides are arranged opposite each other and facing opposite directions; and
- a peripheral surface connecting the first side and the second side.

An intersection between the first side and the peripheral surface forms an edge that includes six side edges connected via six corner edges that are arranged pairwise opposite each other, wherein, of each of the pairs of opposite corner edges one corner edge is a minor corner edge and the other corner edge is a major corner edge. The corner edges are arranged such that the minor corner edges and the major corner edges are alternately arranged along the edge. In a plan view of the first side, each corner edge is formed by one or more curvilinear segments, wherein each major corner edge has a first length of extension, and each minor corner edge has a second length of extension. Any two adjacent side edges that are connected via one of the major corner edges forms a first internal angle with respect to each other, and any two adjacent side edges that are connected via one of the minor corner edges forms a second internal angle with respect to each other. The first length of extension is greater than the second length of extension and the second internal angle is greater than the first internal angle.

Each major corner edge has a first length of extension that in the illustrated embodiment is about three times greater than a second length of extension of each of the minor corner edges.

Two side edges connected by a major corner edge forms a first internal angle with respect to each other, whereas two sides connected by a minor corner edge forms a second internal angle with respect to each other. In the illustrated embodiment, the first internal angle is 105° and the second internal angle is 135°. The second internal angle is the internal angle of the cutting nose 220.

The cutting insert 200 may be made of cemented carbide or some other wear resistant material.

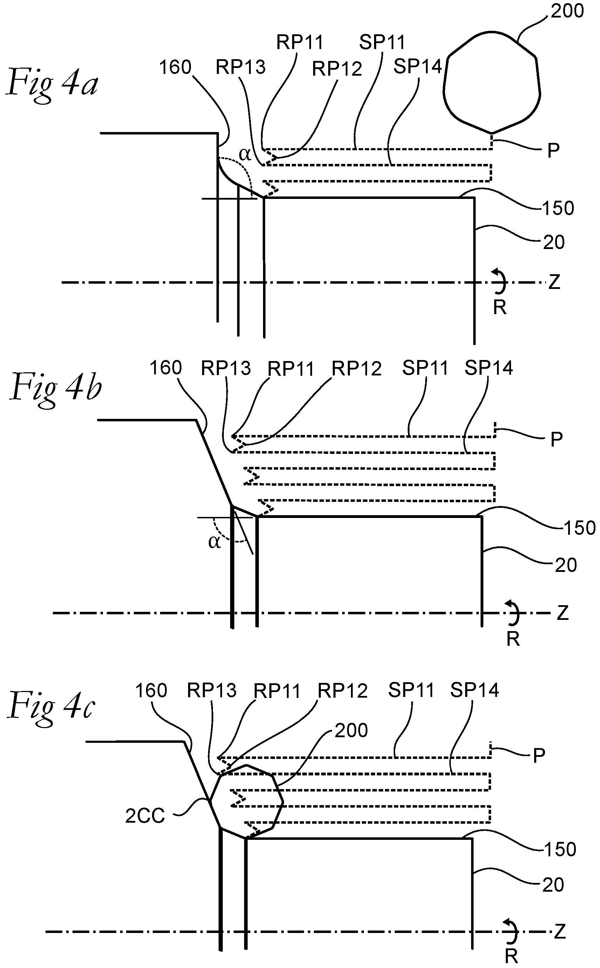

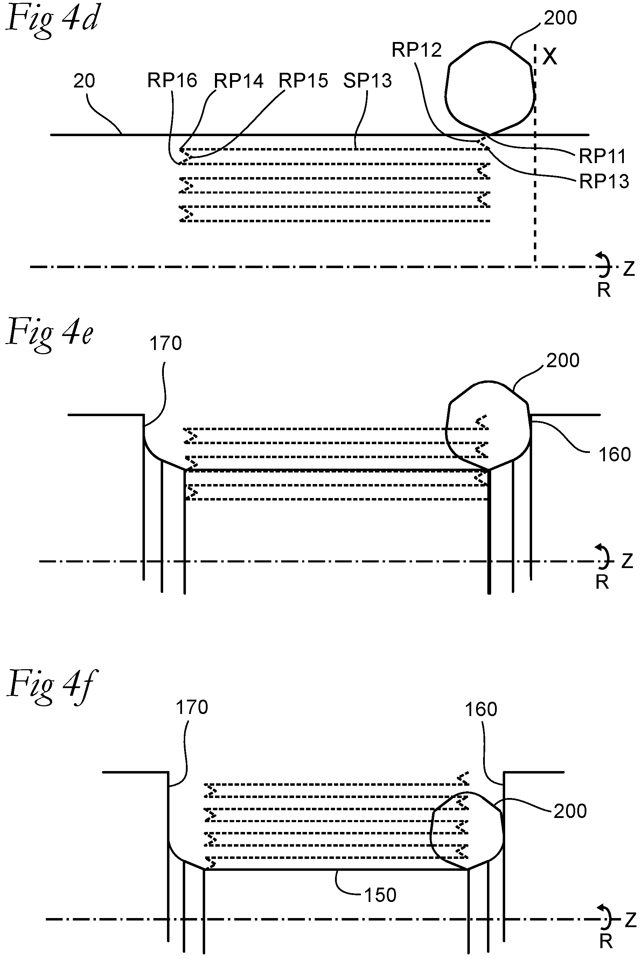

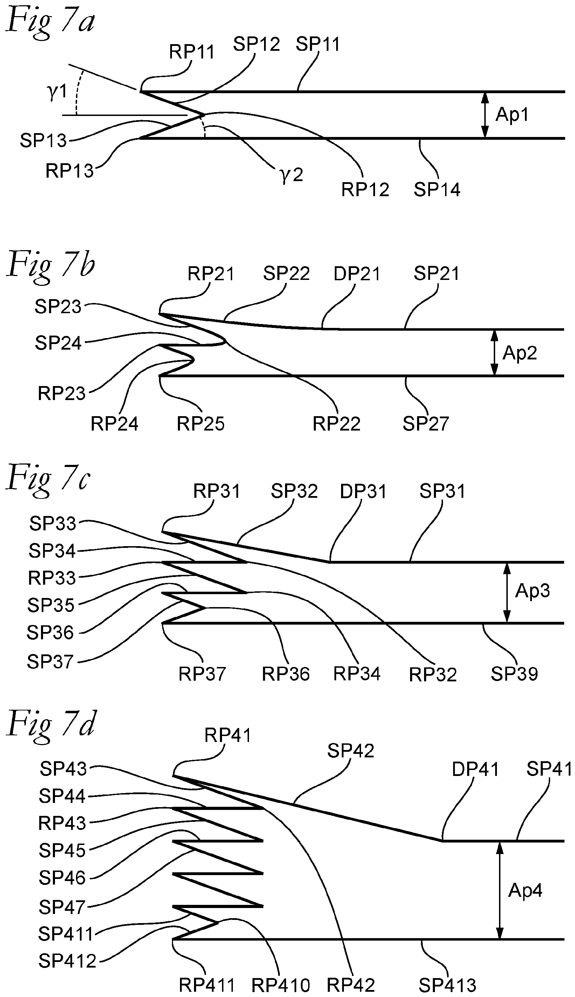

In Figures 4a-e and Figures 7a-7d a number of turning paths P are illustrated. Each turning path P comprises a number of sub paths denoted SPNM, where N is indicating a specific example of a turning path and M is indicating the sub paths of the turning path in sequential order. For example, SP13 is a third sub path of a first turning path. The turning path P comprises a number of return points denoted RPNM, where N is indicating a specific example of a turning path and M is indicating the return point of the turning path in sequential order. For example, RP33 is the third return point of a third turning path. Due to space reasons not all sub paths SP and return points RP are indicated in various figures.

Figure 4a schematically illustrates an example of a turning method for machining a metal workpiece 20 with a turning tool 10. The method comprises moving the cutting nose 220 of the cutting insert 200 along a tool path P for machining the metal workpiece 20. According to this example the cutting insert 200 described with reference to Figure 3 is used for machining the metal workpiece 20.

The method comprises the step of determining a final machined profile of the workpiece 20. According to this example the determined final machined profile of the workpiece 20 comprises a main surface 150 and a shoulder surface 160. According to this example the main surface 150 is parallel to the axis of rotation Z. The shoulder surface 160 is perpendicular to the main surface 150. An internal angle α between the main surface 150 and the shoulder surface 160 is 90°. The corner between the main surface 150 and the shoulder surface 160 is rectangular.

The metal workpiece 20 is rotating around the axis of rotation Z. The metal workpiece 20 is rotated in a rotational direction R.

The method comprises the step of determining a tool path P. According to this example the tool path P comprises the corresponding sub paths as illustrated with reference to Figure 7a. The tool path P described with reference to Figure 7a is repeatably performed to achieve the final machined profile in Figure 4a.

According to an aspect of the invention there is provided a turning method for machining the metal workpiece 20 with a turning tool 10 comprising the cutting edge 212, which cutting edge 212 includes the cutting nose 220 and the clearance corner 2CC.

The tool path P comprises a number of sub paths and return points as described in greater detail below.

The method comprises the step of determining a cutting depth Ap1. According to this example the selected cutting depth Ap1 is 3 mm. The cutting depth is measured in the direction X, perpendicular to the axis of rotation Z.

According to this example the first cutting edge 211 and the second cutting edge 212, when being in active cut, has an entering angle of 30°.

The metal workpiece 20 is cut by moving the cutting nose 220 along a first sub path SP11 towards the shoulder surface 160. The first sub path SP11 extends parallel to the main surface 150 and along a fourth sub path SP14 at selected cutting depth Ap1.

The first sub path SP11 is parallel to the rotational axis Z. The first sub path SP11 is parallel to the main surface 150. The first sub path SP11 ends at a first return point RP11. At this point the clearance corner 2CC is positioned on the shoulder surface 160. Hereby the most forward point FP of the cutting nose 220 is positioned at the first return point RP11. During movement along the first sub path SP11 the second main cutting edge 212 and the cutting nose 220 are in active cut.

According to another example the first sub path SP11 may extend parallel to the main surface for achieving a smooth peripheral surface of the workpiece. This may be performed when a peripheral surface of workpiece initially is rough so that an even surface of the workpiece 20 is achieved for subsequent machining.

A second sub path SP12 starts at the first return point RP11 and extends in a direction away from the shoulder surface 160. The second sub path SP12 also extends in a direction towards the main surface 150. The second sub path SP12 is linear. The second sub path SP12 is inclined relative to the main surface 150 at an angle γ1. According to this example γ1 is 28°. The angle γ1 may according to an example be 2-10° less than the entering angle.

During movement along the second sub path SP12 the front point FP of the cutting nose 220 is moved a distance measured in a direction of the axis of rotation Z, at which distance half the cutting depth has been reached.

During movement along the second sub path SP12 the first main cutting edge 211 and the cutting nose 220 are in active cut. The second main cutting edge 212 is not in active cut. A clearance angle of the second main cutting edge is provided. The clearance angle may be e.g. 5°.

The movement of the cutting nose 220 is stopped at a second return point RP12. Hereby the most forward point FP of the cutting nose 220 is positioned at the second return point RP12.

A third sub path SP13 extends in a direction towards the shoulder surface 160. The second sub path SP13 also extends in a direction towards the main surface 150. The third sub path SP13 is linear. The third sub path SP13 is inclined relative to the main surface 150 at an angle γ2. According to this example γ2 is equal to γ1. According to this example the second sub path SP12 and the third sub path SP13 have the same amount of the angle relative to the main surface 150. The cutting nose 220 is moved toward the shoulder surface 160 until the second clearance corner 2CC is positioned on the shoulder surface 160. During movement along the third sub path SP13 the second main cutting edge 212 and the cutting nose 220 are in active cut. The first main cutting edge 211 is not in active cut. A clearance angle of the first main cutting edge 211 is provided. The clearance angle may be e.g. 5°.

The third sub path SP13 ends at a third return point RP13. Hereby the most forward point FP of the cutting nose 220 is positioned at the third return point RP13.

A fourth sub path SP14 extends in a direction away from the shoulder surface 160. The fourth sub path SP14 is parallel to the rotational axis Z. The fourth sub path SP14 is parallel to the main surface 150. The fourth sub path SP14 extends to a point beyond the main surface 150. Hereby the cutting nose 220 is in active cut along the whole main surface 150 away from the third return point RP13 and away from the shoulder 160. During movement along the fourth sub path SP14 the first main cutting edge 211 and the cutting nose 220 are in active cut.

As seen in Figure 4a the corner between the main surface 150 and the shoulder 160 holds some rest bulk material. The corner between the main surface 150 and the shoulder 160 has the form corresponding to the form of the second main cutting edge 212. To achieve the determined final profile of the metal workpiece 20, i.e. comprising a corner having ideally no rest mass, a different cutting insert may be used for machining the metal workpiece 20 to its final machined profile. Hereby a profiling cutting insert or a grooving cutting insert may be used. Potential irregularities of the shoulder surface 160 may be machined to achieve the determined final determined profile of the metal workpiece 20.

Figure 4b schematically illustrates an example of a tool path P for machining the metal workpiece 20. According to this example the determined final machined profile of the workpiece 20 comprises a main surface 150 and a shoulder surface 160. An internal angle $\alpha$ between the main surface and the shoulder surface is 100°. According to this example a cutting insert 200 has the shape of an octagon, which is illustrated with reference to Figure 4c.

According to this example the tool path P comprises the corresponding sub paths as illustrated with reference to Figure 7a. In order to achieve the shoulder surface 160 a number of subsequent return points of the tool path P are positioned at various distances further away from the shoulder surface 160 along the axis of rotation Z.

According to this example a negative cutting insert may be used.

Figure 4c schematically illustrates the example described with reference to Figure 4b wherein the octagon shaped cutting insert is illustrated. In this example some rest bulk mass in a corner between the main surface 150 and the shoulder surface 160 is remaining. This may be subsequently machined by using a cutting insert suitable for this purpose.

Figure 4d-4f schematically illustrate an example of a tool path P for machining the metal workpiece 20. According to this example determined final machined profile of the workpiece 20 comprises the main surface 150, a first shoulder surface 160 and a second shoulder surface 170. An internal angle between the main surface 150 and the first shoulder surface 160 is 90°. An internal angle between the main surface 150 and the second shoulder surface 170 is 90°. According to this example a groove in the workpiece 20 is defined by the main surface 150, the first shoulder surface 160 and the second shoulder surface 170.

The groove is hereby formed using the inventive method by alternately performing metal cutting described with reference to e.g. Figure 4a and Figure 7a at the first shoulder surface 160 and the second shoulder surface 170. At certain return points of the tool path P the first clearance corner CC1 of the cutting insert 200 is positioned at the first shoulder surface 160. At certain return points of the tool path P the second clearance corner CC2 of the cutting insert 200 is positioned at the second shoulder surface 170.

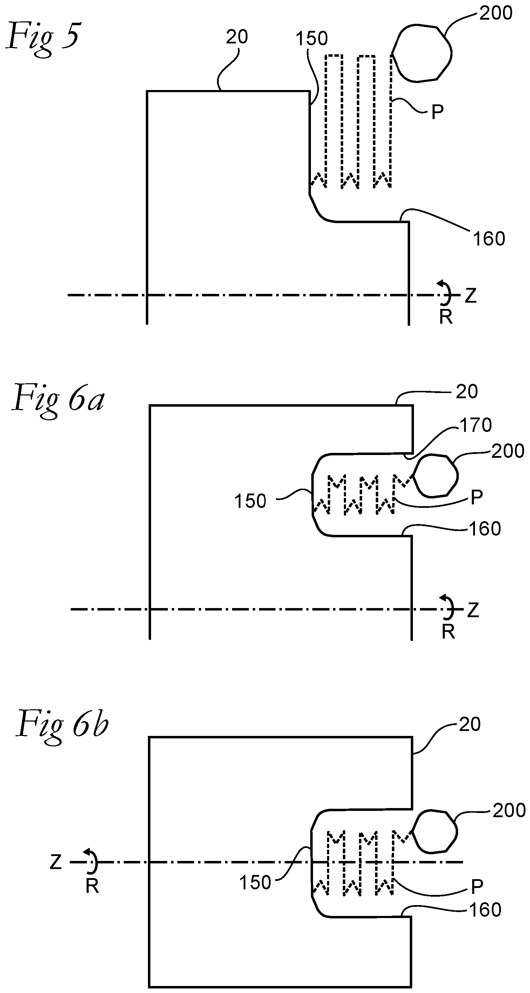

Figure 5 schematically illustrates a tool path for machining the metal workpiece 20. According to this example the shoulder surface 160 extends along the axis of rotation Z and the main surface 150 extends inward toward the shoulder surface 150. According to this example the main surface 150 is positioned in a plane perpendicular to the rotational axis Z. According to this example the shoulder surface 160 extends parallel to the rotational axis Z.

Figure 6a schematically illustrates a tool path P for machining the metal workpiece 20.

According to this example the main surface 150 is oriented in a plane perpendicular to the rotational axis Z. According to this example the determined final machined profile is a circular groove, wherein the circular groove comprises the main surface 150, the first shoulder surface 160 and the second shoulder surface 170. The first shoulder surface 160 extends along the axis of rotation Z. The second shoulder surface 170 extends along the axis of rotation Z. The main surface 150 extends between the first shoulder surface 160 and the second shoulder surface 170 perpendicular to the axis of rotation Z.

Figure 6b schematically illustrates a tool path P for machining the metal workpiece 20.

According to this example the main surface 150 is oriented in a plane perpendicular to the rotational axis Z. According to this example the determined final machined profile is a hole, wherein the hole comprises the main surface 150 and the shoulder surface 160. The shoulder surface 160 extends along the axis of rotation Z. The main surface 150 forms a bottom of the hole.

Figure 7a-d schematically illustrate examples of a tool path P for machining the metal workpiece 20 according to the proposed method. The cutting nose 220 of the cutting insert is moved along the tool path P according to the proposed method.

With reference to Figure 7a the tool path P has a first sub path SP11, which is parallel to the main surface 150 and parallel to the axis of rotation Z. The first sub path SP11 relates to a movement toward the shoulder surface 160. The first sub path SP11 ends in a first return point RP11, at which first return point the clearance corner CC2 is positioned on the shoulder surface 160. A second sub path SP12 is directed away from the shoulder surface 160 and toward the main surface 150. The second sub path SP12 starts from the first return point RP11 and stops at a second return point RP12. A third sub path SP13 is directed toward the shoulder surface 160 and toward the main surface 150. The third sub path SP13 starts from the second return point RP12 and ends at a third return point RP13, at the selected cutting depth Ap1. According to this example the selected cutting depth Ap1 is 3,0 mm. At the third return point RP13 the clearance corner CC2 is positioned on the shoulder surface 160. The second sub path SP12 and the third sub path SP13 are linear. The tool path P has a fourth sub path SP14, which is parallel to the main surface 150 and parallel to the axis of rotation Z. The fourth sub path SP14 relates to a movement away from the shoulder surface 160.

With reference to Figure 7b sub paths SP21-SP27 are illustrated. A number of return points RP21-RP5 are illustrated. According to this example the selected cutting depth Ap2 is 3,0 mm.

The first sub path SP21 is parallel to the main surface 150 and parallel to the axis of rotation Z. The first sub path SP21 ends at a deviation point DP21. The deviation point DP21 is positioned relatively close to the shoulder surface 160, such as e.g. within the interval of 2-20 mm. The second sub path SP22 is extending from the deviation point DP21 towards the shoulder surface 160 and away from the axis of rotation Z. The second sub path SP22 is linear and ends in the first return point RP21.

According to this example the sub paths SP23-SP26 extending between the return points RP21-RP25 are curved.

The tool path P has a seventh sub path SP27, which is parallel to the main surface 150 and parallel to the axis of rotation Z. The seventh sub path SP27 relates to a movement away from the shoulder surface 160.

With reference to Figure 7c sub paths SP31-SP39 are illustrated. According to this example the selected cutting depth Ap3 is 4,0 mm. Seven return points RP31-RP37 are illustrated.

The first sub path SP31 is parallel to the main surface 150 and parallel to the axis of rotation Z. The first sub path SP31 ends at a deviation point DP31. The deviation point DP31 is positioned relatively close to the shoulder surface 160, such as e.g. within the interval of 5-20 mm. The second sub path SP32 is extending from the deviation point DP31 towards the shoulder surface 160 and away from the axis of rotation Z. The second sub path SP32 is linear and ends at the first return point RP21.

According to this example the second return point RP32 and the fourth return point RP34 are positioned at a certain position along the axis of rotation Z. The sixth return point RP36 is positioned closer to the shoulder surface 160 than the second and fourth return positions RP32, RP34. According to this example the sixth return point RP36 is positioned midway between the shoulder surface 160 than the second and fourth return positions RP32, RP34 along the axis of rotation Z.

According to this example the fourth sub path SP34 and the sixth sub path SP36 are parallel to the axis of rotation Z. The third sub path SP33, fifth sub path SP35, seventh sub path SP37 and eighth sub path SP38 are directed either away from the shoulder surface 160 or toward the shoulder surface according to the Figure 7c. The third sub path SP33, fifth sub path SP35, seventh sub path SP37 and eighth sub path SP38 are also directed toward the main surface 150.

With reference to Figure 7d sub paths SP41-SP413 are illustrated. According to this example the selected cutting depth Ap4 is 5,0 mm. Eleven return points RP41-RP411 are illustrated. By selecting a plurality of return points and intermittently positioned sub paths of the machining path an improved surface finish of the shoulder surface is achieved. By performing the steps b, c and d repeatably and subsequently a number of times it is possible to effectively reach a relative great cutting depth at the shoulder surface while providing high quality surface finish of the shoulder surface. By performing the steps b, c and d repeatably and subsequently a number of times improved chip control is achieved.

According to one example the step b comprises moving the cutting nose toward the shoulder surface and away from the main surface to a return point being positioned about 20% of the selected cutting depth further away from the main surface relative the cutting path of the step a.

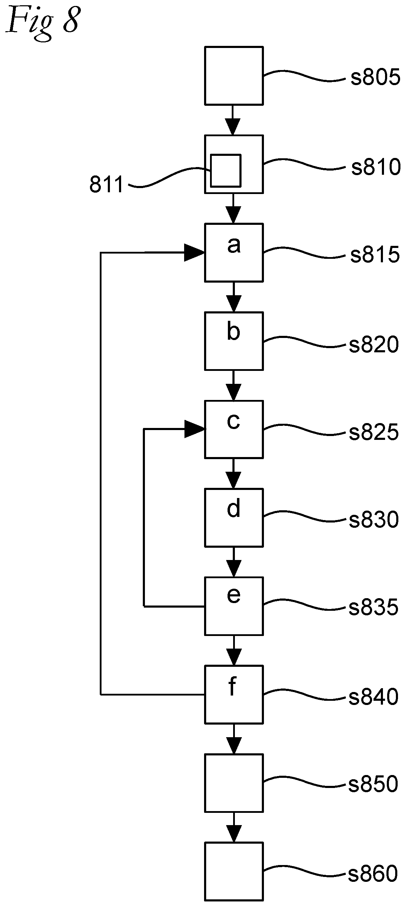

Figure 8 schematically illustrates a flowchart of a turning method for machining the metal workpiece with the turning tool according to an example of the invention.

According to an example of the invention there is provided a turning method for machining a metal workpiece 20 with the turning tool 10. The turning tool 10 comprises the cutting insert 200, see e.g. Figure 3.

The turning method has a step s805. The step s805 comprises determining a final machined profile of the metal workpiece 20. The final machined profile is a representation of the metal workpiece after it has been machined. The final machined profile comprises a main surface 150 and a shoulder surface 160. The final machined profile may include an internal angle of 90-120° between the main surface 150 and the shoulder surface 160.

According to one example the main surface 150 extends along the axis of rotation Z and the shoulder surface 160 extends inward toward the main surface 150.

According to another example the shoulder surface 160 extends along the axis of rotation Z and the main surface 150 extends inward toward the shoulder surface 160.

The turning method has a step s810. The step s810 comprises determining a cutting depth. The cutting depth Ap may be determined on basis of the geometry of the cutting insert 200, a selected feed rate, etc. The determined cutting depth Ap may be within the interval of 0,5-5,0 mm. The cutting depth Ap may be defined as a distance in a direction inward the main surface 150.

According to an example the method step s810 comprises the step 811, including selecting an entering angle of the cutting edge, which entering angle is within the interval of 10°-45°, and performing any one of the steps s815 - s840, by cutting at the selected entering angle.

The turning method has a step s815. The step s815 comprises rotating the metal workpiece around an axis of rotation Z. The metal workpiece is rotating in a direction of rotation R.

With reference to the following steps s820-s840, these steps comprises cutting the metal workpiece 20 with the cutting nose 220.

The turning method has a step s820. The step s820 comprises the step a, including moving, at the determined cutting depth Ap, the cutting nose 220 along the main surface 150, towards the shoulder surface 160.

The turning method has a step s820. The step s820 comprises the step b, including moving the cutting nose 220 further toward the shoulder surface 160 until the clearance corner 1CC is positioned on the shoulder surface 160. The cutting nose 220 may be moved in a direction parallel to the axis of rotation. According to one example step b further comprises moving the cutting nose away from the main surface. Hereby the clearance corner 1CC is positioned on the shoulder surface 160 further away from the main surface compared to the movement in the direction parallel to the axis of rotation. According to an example the cutting nose is moved towards the main surface 150 and towards the shoulder surface 160.

The turning method has a step s825. The step s825 comprises the step c, including moving the cutting nose 220 away from the shoulder surface 160. According to an example the cutting nose 220 is moved 2,0-10,0 mm along the main surface. The cutting nose 220 is moved towards the main surface 150 and away from the shoulder surface 160. According to an example the cutting nose 220 is moved toward the main surface 150 to at least half the cutting depth.

The turning method has a step s830. The step s830 comprises the step d, including moving the cutting nose 220 toward the shoulder surface 160 until the clearance corner 1CC is positioned on the shoulder surface 160. According to an example the cutting nose is moved 2,0-10,0 mm along the main surface 150. According to an example the cutting nose is moved toward the shoulder surface and toward the main surface.

According to an embodiment, after step b, the steps s825 and s830, may be repeated a number of times, such as for example 1-5 times. The steps s825 and s830 are only repeated until the cutting nose has moved toward the main surface a distance at most the cutting depth.

The turning method has a step s835. The step s835 comprises the step e, including moving the cutting nose 220 away from the shoulder surface 160. According to an example the cutting nose 220 is moved in a direction away from the shoulder surface 160 and toward the main surface 150, to a position where the cutting depth Ap is reached.

The turning method has a step s840. The step s840 comprises the step f, including moving, at the cutting depth Ap, the cutting nose 220 along the main surface 150, further away from the shoulder surface 160.

According to an embodiment the steps s815 - s840 are repeated a plurality of times.

After the step s840 the method step s850 is performed. The step s850 comprises to machine the metal workpiece 20 to achieve the final machined profile of the metal workpiece 20. This step may include to machine irregularities of the main surface 150 and the shoulder surface 160. This step may also include to machine the corner between the main surface 150 and the shoulder surface 160. Hereby the final machined profile of the metal workpiece 20 is achieved. In this step a cutting insert 200 having a cutting nose angle of 10-25° may be used.

After the method step s850 the method ends (s860).

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward", "front", "rearward" and "rear" refer to features as shown in the current drawings and as perceived by the skilled person.

## Claims

1. A turning method for machining a metal workpiece (20) with a turning tool (10) comprising a cutting edge, which cutting edge includes a cutting nose (220) and a clearance corner (1CC), wherein the method comprises the steps of:

   - determining a final machined profile of the metal workpiece (20), wherein the final machined profile comprises a main surface (150) and a shoulder surface (160);
   - determining a cutting depth (Ap);
   - rotating the metal workpiece (20) around an axis of rotation (Z);
   - cutting the metal workpiece with the cutting nose (20) by,
   - a) moving, at the cutting depth, the cutting nose along the main surface (150), towards the shoulder surface (160),
   - b) moving the cutting nose (220) further toward the shoulder surface (160) until the clearance corner is positioned on the shoulder surface,
   - c) moving the cutting nose (220) away from the shoulder surface (160),
   - d) moving the cutting nose toward the shoulder surface until the clearance corner is positioned on the shoulder surface,

      - e) moving the cutting nose away from the shoulder surface,

   wherein any of the steps b - e comprises moving the cutting nose towards the main surface,

      - f) moving, at the cutting depth, the cutting nose along the main surface, further away from the shoulder surface.

2. The turning method according to claim 1, wherein the steps b - e comprise moving the cutting nose (220) toward the main surface (150) a distance at most the cutting depth (Ap1; Ap1, Ap2; Ap3; Ap4).

3. The turning method according to claim 1 or 2, wherein both the steps c and d comprise moving the cutting nose (220) towards the main surface (150).

4. The turning method according to any one of the preceding claims, comprising the step of:

   - after step b, performing the steps c - d a plurality of times before performing the step f.

5. The turning method according to claim 3, wherein the step b further comprises moving the cutting nose (220) away from the main surface (150).

6. The turning method according to any one of the preceding claims, comprising the steps of:

   - selecting an entering angle of the cutting edge, which entering angle is within the interval of $10^0$-$45^0$;
   - performing any of the steps a - f, by cutting at the selected entering angle.

7. The turning method according to any one of the preceding claims, further comprising

   - repeating the steps a - f a plurality of times.

8. The turning method according to any one of the preceding claims, wherein the cutting edge includes two of the clearance corners (1CC, 2CC), wherein the two clearance corners (1CC, 2CC) are located on one respective side of the cutting nose (220), comprising the steps of:

   - determining the final machined profile of the metal workpiece (20), wherein the final machined profile is a groove, wherein the groove comprises the main surface (150), two of the shoulder surface in form of a first shoulder surface (160) and a second shoulder surface (170); and
   - alternately performing steps a -f at the first shoulder surface (160) and at the second shoulder surface (170).

9. The turning method according to any one of the preceding claims, wherein the main surface (150) extends along the axis of rotation (Z) and the shoulder surface (160) extends inward toward the main surface (150).

10. The turning method according to any one of claims 1-8, wherein the shoulder surface (160) extends along the axis of rotation (Z) and the main surface (150) extends inward toward the shoulder surface (160).

11. The turning method according to any one of the preceding claims, wherein the step of determining the cutting depth (Ap) comprises determining the cutting depth to be within an interval of 0,5-5,0 mm.

12. The turning method according to claim 6, further comprising the steps of,

   - determining a sub path angle relative to the main surface (150), which angle is 2-10° less than the selected entering angle of the cutting edge; and
   - when moving the cutting nose (220) towards the main surface (150) during any of the steps c and d, moving the cutting nose (220) at the determined sub path angle.

13. The turning method according to any one of the preceding claims, comprising, during either step c or d, moving the cutting nose (220) at least half the cutting depth.

14. The turning method according to any one of the preceding claims, wherein the cutting edge comprises a first main cutting edge (211) connected to the cutting nose (220) and a second main cutting edge (212) connected to the cutting nose (220) at an opposite side thereof, wherein one main cutting edge is in active cut when moving toward the shoulder surface and the other main cutting edge is in active cut when moving away from the shoulder surface, comprising the step of selecting a direction of movement for steps c and d for forming a clearance angle between the main cutting edge not being in active cut and the workpiece (20).

15. The turning method according to any one of the preceding claims, wherein determining the final machined profile of the metal workpiece (20) comprises selecting an internal angle of 90-120° between the main surface (150) and the shoulder surface (160).

16. A system (100) comprising a computer numerical controlled machine tool (101) including a turning tool (10) for machining a metal workpiece (20), wherein the system further comprises processing circuitry (103) and a memory (104) and is configured to perform the method according to any one of the claims 1-15.

17. A numerical control program (105), comprising computer readable code means to be executed by the processing circuitry (103) of the system (100) according to claim 16, which computer readable code means when executed causes the system (100) to perform the method according to any one of the

**EP 4 786 079 A1**

claims 1-15.

*Fig 1*

*Fig 2*

*Fig 3*

*Fig 4a*

*Fig 4b*

*Fig 4c*

*Fig 4d*

*Fig 4e*

*Fig 4f*

*Fig 5*

*Fig 6a*

*Fig 6b*

Fig 7a

Fig 7b

Fig 7c

Fig 7d

*Fig 8*

## EUROPEAN SEARCH REPORT

**Application Number**

EP 25 15 5140

### DOCUMENTS CONSIDERED TO BE RELEVANT

| Category | Citation of document with indication, where appropriate, of relevant passages | Relevant to claim |
|---|---|---|
| A | US 9 817 390 B2 (HOLT SEAN [GB]; SANDVIK LTD [GB]) 14 November 2017 (2017-11-14) * claim 1 * * figures 1-11 * ----- | 1-17 |
| A | DE 10 2008 049515 A1 (HELLER GEB GMBH MASCHF [DE]) 8 April 2010 (2010-04-08) * paragraph [0060] * * figure 7e * ----- | 1-17 |
| A | US 11 630 438 B2 (SIEMENS IND SOFTWARE INC [US]) 18 April 2023 (2023-04-18) * figures 1-6 * ----- | 1-17 |

**CLASSIFICATION OF THE APPLICATION (IPC)**

INV.
B23B1/00
B23B25/02
B23B27/14

**TECHNICAL FIELDS SEARCHED (IPC)**

B23B

The present search report has been drawn up for all claims

| Place of search | Date of completion of the search | Examiner |
|---|---|---|
| The Hague | 7 July 2025 | Schäfer, Lisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 4 786 079 A1**

## ANNEX TO THE EUROPEAN SEARCH REPORT
## ON EUROPEAN PATENT APPLICATION NO.

EP 25 15 5140

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | | Publication date | Patent family member(s) | | Publication date |
|---|---|---|---|---|---|
| US 9817390 | B2 | 14-11-2017 | CA | 2808938 A1 | 01-03-2012 |
| | | | CN | 103238125 A | 07-08-2013 |
| | | | EP | 2609474 A2 | 03-07-2013 |
| | | | JP | 5904561 B2 | 13-04-2016 |
| | | | JP | 2013536097 A | 19-09-2013 |
| | | | KR | 20140029351 A | 10-03-2014 |
| | | | MX | 341994 B | 09-09-2016 |
| | | | US | 2013218319 A1 | 22-08-2013 |
| | | | WO | 2012025741 A2 | 01-03-2012 |
| DE 102008049515 | A1 | 08-04-2010 | NONE | | |
| US 11630438 | B2 | 18-04-2023 | CN | 115087936 A | 20-09-2022 |
| | | | EP | 4055452 A1 | 14-09-2022 |
| | | | US | 2023012457 A1 | 12-01-2023 |
| | | | WO | 2021118603 A1 | 17-06-2021 |

EPO FORM P0459

For more details about this annex : see Official Journal of the European Patent Office, No. 12/82

22